# EUROPEAN PATENT APPLICATION

(11) **EP 2 789 927 A2**
(43) Date of publication of application: **15.10.2014**
(21) Application number: 14164096.1
(22) Date of filing: 09.04.2014
(51) Int. Cl.: F24J 2/05, F24J 2/46

(54) **Solar thermal air flow heating tube device and solar thermal air flow heating tube system**

(30) Priority: 12.04.2013 AU 2013901255
(71) Applicant: Pintar, Marko, Brighton, VIC 3186 (AU); Zheng, Jing Jing, Brighton, VIC 3186 (AU)
(72) Inventor: Pintar, Marko, Brighton, VIC 3186 (AU); Zheng, Jing Jing, Brighton, VIC 3186 (AU)
(74) Representative: Patentanwälte Ruff, Wilhelm, Beier, Dauster & Partner

(57) **Abstract**

The invention relates to a solar thermal air flow heating tube device (1) and a solar thermal air flow heating tube system (21, 21') equipped therewith.

According to the invention the solar thermal air flow heating tube device (1) comprises a twin-wall evacuated solar tube (2) comprising an inner tube (3) having a first end (7) closed and a second end (8) opened, and an outer tube (4) coaxially surrounding the inner tube, said inner and outer tubes defining an evacuated annular space (11) in-between, and a solar radiation absorbing coating (6) being provided on an outside and/or inside wall of the inner tube, and an air flow guiding element (12) arranged in an interior of the inner tube to define a first air flow channel (13) and a second air flow channel (14), said second air flow channel being separated from the first air flow channel and serially connected to said first air flow channel adjacent to the closed first end of the inner tube.

Application e.g. for space heating or industrial drying processes.

## Description

The invention relates to a solar thermal air flow heating tube device and a solar thermal air flow heating tube system equipped therewith.

Most of the people around the world require space heating of residential and commercial buildings for at least a few months of the year. Solar energy has been used for a long time in various forms for domestic and commercial heating. In the past few decades a great number of solar thermal collectors have been installed to serve this purpose. The majority of these solar thermal collectors are used for heating household water and for solar thermal support of hydronic space heating.

One way of reducing heating costs with solar thermal energy can be achieved by installing a solar thermal powered hydronic space heating system. This can be used either as a supplementary system to an existing space heating system or as a sole source of space heating. Applying a solar thermal energy heating system to an existing space heating system is often not cost effective. Replacing an existing ducted gas heating system with a solar thermal powered hydronic space heating system is also not realistic as it will be too expensive in most situations.

During the past two decades various parties have presented some innovative ideas for solar thermal heating of air for space heating. One reasonably well known example of such an attempt is a "solar wall". A solar wall consists of specially perforated and formed metal panels as a key component, installed in a particular manner. These panels are heated by solar irradiation. Air circulation then supplies heated air from the solar wall into the space to be heated.

Other variations rely on solar thermal flat panel type collectors directly. In appearance these solar thermal collectors resemble flat plate solar thermal collectors for water heating, except that these collectors heat air, which is in direct thermal contact with the absorber. Air from the space to be heated or from outdoor is fed into this collector, where it is heated and then directed to the space at a higher temperature, thus achieving space heating.

However all above devices have some serious disadvantages like very poor energy efficiency, especially in the coldest part of the year when the need for effective space heating is highest, the thermal output from these devices is of low quality, therefore the temperature of heated air is also low, resulting in feeling of cold drafts and generally in poor level of human comfort, and due to the inability to supply heated air at a comfortably high temperature, the air flow rate through these heating devices needs to be high in order to extract some useful heating energy from the devices, which results in higher than desired noise levels.

Full glass twin-wall evacuated solar tubes, also called "double-wall solar tubes", have been on the market for over 20 years. They lend themselves to manufacture economically. Even though these tubes have certain disadvantages, because of their low cost and reasonable performance these tubes are widely accepted for solar thermal heating of water to moderate water temperatures in good to moderate climatic conditions. The full glass twin-wall evacuated solar tube is often used in combination with a heat-pipe to form a "slip-on heat-pipe" style water heating solar thermal collector. Because in most cases due to different reasons only one end of the twin-wall glass tube assembly is open, these tubes are not directly suitable for solar thermal air heating.

It is the technical problem underlying the invention to provide a new type of a solar thermal air heating device and system having increased efficiency as compared to the prior art collectors mentioned above, resulting in a high temperature of heated air and thus allowing to keep an air flow rate through this heating device low resulting in a low noise level, and which can be manufactured by using parts of existing technologies.

The invention solves this problem by providing a solar thermal air flow heating tube device having the features of claim 1 and a solar thermal air flow heating tube system having the features of claim 6. Advantageous embodiments are mentioned in the dependent claims the wording of which is herewith incorporated into the description by reference to avoid unnecessary text repetition.

The solar thermal air flow heating tube device of the invention comprises a twin-wall evacuated solar tube comprising an inner tube having a first end closed and a second end opened, and an outer tube coaxially surrounding the inner tube, said inner and outer tubes defining an evacuated annular space in-between, and a solar radiation absorbing coating being provided on an outside and/or inside wall of the inner tube, and an air flow guiding element arranged in an interior of the inner tube to define a first air flow channel and a second air flow channel, said second air flow channel being separated from the first air flow channel and serially connected to said first air flow channel adjacent to the closed first end of the inner tube.

The inner tube is made of a suitable material, e.g. glass. The solar radiation absorbing coating absorbs incident solar radiation and generates thermal energy thereby heating the inner tube. The outer tube is made of a material being transparent for solar radiation, e.g. clear glass, thereby enabling transmission of the solar radiation. The air flow guiding element arranged in the inner tube separates the space in the inner tube into a first air flow channel and a second air flow channel and is made of a suitable material, e.g. a glass or metal material. The cross-section of the inner and outer tubes can be arbitrarily shaped. Advantageous tube cross-section shapes are circular, hexagonal or quadratic and the inner and outer tubes may have the same kind of cross-section shape. At the open end of the inner tube air can enter and leave the first and the second air flow channels, respectively.

At an inner end of the air flow guiding element, which is facing towards the closed end of the inner tube, there is some space left enabling the air to flow from the first air flow channel to the second air flow channel so that the serial connection of the channels is established. The air flows through the first air flow channel and then through the second air flow channel. While the air is flowing through the first and/or the second air flow channel, it is in direct thermal contact to said inner tube being provided with the solar radiation absorbing coating and hence the air is heated. The annular space between the outer and inner tubes is evacuated to minimize conductive and convective heat transfer from the inner tube to the outer tube and thereby to the environment.

The solar thermal air flow heating tube device can be constructed as an effective, economical, reliable and durable solar air heating device. It facilitates a simple installation and effective heat transfer from the inner wall of the inner tube to the air flowing through the inner tube, thus heating the air effectively and hence delivering high quality heat. This makes it possible to facilitate an uniform and especially moderate to low air flow under all normal operating conditions, thus providing high human comfort level.

In an advantageous embodiment of the invention the air flow guiding element comprises an insert tube. The insert tube can be easily installed and adjusted in the twin-wall evacuated solar tube. In a further development of the invention the insert tube is coaxially arranged to the inner tube. This arrangement allows in a very advantageous way a very uniform air flow, especially when the insert, inner and outer tubes have the same kind of cross-section shape.

In an advantageous embodiment of the invention the outer tube is closed at a same end as the closed first end of the inner tube and edges of the other ends of the outer and inner tubes are connected to each other so as to close the evacuated annular space. The other ends of the outer and inner tubes can be directly connected to each other and/or by the use of an additional connection element. In the case of a direct connection of the outer tube with the inner tube it is advantageous, when the outer tube and inner tube are made of the same raw material, e.g. glass, which may for instance be connected by welding.

The closed ends may or may not touch each other. In a further development of the invention the twin-wall evacuated solar tube has a U-shaped longitudinal section. In this case the closed ends do not touch each other and the evacuated space surrounds the closed end of the inner tube. Advantageously the U-shape may comprise a semi-circular shape or a kink-like shape. By having a twin-wall evacuated solar tube with a U-shaped longitudinal section the outer tube and the inner tube are advantageously in contact only at the other ends, which helps to minimize conductive and convective heat transfer from the inner tube to the outer tube and thereby to the environment.

The solar thermal air flow heating tube system of the invention comprises a plurality of such solar thermal air flow heating tube devices, a first manifold, to which the first air flow channels of the solar thermal air flow heating tube devices are pneumatically connected via the respective open end of each inner tube, and a second manifold, to which the second air flow channels of the solar thermal air flow heating tube devices are pneumatically connected via the respective open end of each inner tube. In this manner a parallel arrangement of the plurality of the solar thermal air flow heating tube devices is obtained. Advantageously the first and second manifolds serve as a common-pressure space, and are intended to achieve approximately equal air pressure within each of said manifolds under all operating conditions, thus ensuring a substantially uniform air flow distribution through all solar thermal air flow heating tube devices. Advantageously each of the first and second manifolds features an outer thermal insulation. Depending on the application the first manifold may be connected to at least one air flow inlet and the second manifold may be connected to at least one air flow outlet or vice versa depending on the air flow direction.

In an advantageous embodiment of the invention the first and second manifolds are integrated parts of a manifold arrangement, wherein said second manifold is separated from the first manifold by an intermediate wall. Hence, only the manifold arrangement has to be installed or fixed e.g. on a roof or at a wall of a building. The open ends of the inner tubes may be directly attached to an outer wall of the manifold arrangement, and the outer ends of the air flow guiding elements may be directly attached to the intermediate wall, which is advantageous in particular in the case where the air flow guiding elements comprise insert tubes, which could then protrude out of the inner tubes. Advantageously the intermediate wall features a thermal insulation in order to minimize heat transfer from the manifold which contains heated air to the manifold which contains cold air.

In an advantageous embodiment of the invention the solar thermal air flow heating tube system comprises at least one motorized fan for driving an air flow through the first and second manifolds and the serially connected first and second air flow channels. Air is supplied by the fan from the space which the heater is intended to heat or from outdoor into the first manifold, from which it progresses through the solar thermal air flow heating tube devices in which the air is heated, then further to the second manifold and then further to the space to be heated.

In an advantageous embodiment of the invention the solar thermal air flow heating tube system comprises a temperature control for excess heat release into the environment. Especially in summer, e.g. when space heating is not desired, parts of the solar thermal air flow heating tube system can be prevented from being exposed to very hot air by releasing the hot air into the environment. In a further development of the invention the temperature control comprises at least one ventilation flap. The at least one ventilation flap may be attached to the solar thermal air flow heating tube devices and/or to the first and/or second manifold or the manifold arrangement. The at least one ventilation flap may be controlled either mechanically, electrically or by any other conventional means.

In an advantageous embodiment of the invention the solar thermal air flow heating tube system comprises an electronic controller for controlling the at least one motorized fan and/or the temperature control. Advantageously the electronic controller controls and thereby regulates said parts of the solar thermal air flow heating tube system in accordance with parameters like temperature, time, maximum noise level etc., which are supplied by a person or other means.

Advantageous embodiments of the invention are described in the following and shown in the drawings, in which:
- Fig. 1: is a perspective, partly sectional view of a solar thermal air flow heating tube device,
- Fig. 2: is a longitudinal sectional view of the solar thermal air flow heating device of Fig. 1,
- Fig. 3: is a schematic longitudinal sectional view of a solar thermal air flow heating tube system,
- Fig. 4: is a perspective sectional view of another solar thermal air flow heating tube system, and
- Fig. 5: is a perspective view of an intermediate wall with attached air flow inlets and an air flow outlet of the solar thermal air flow heating tube system of Fig. 4.

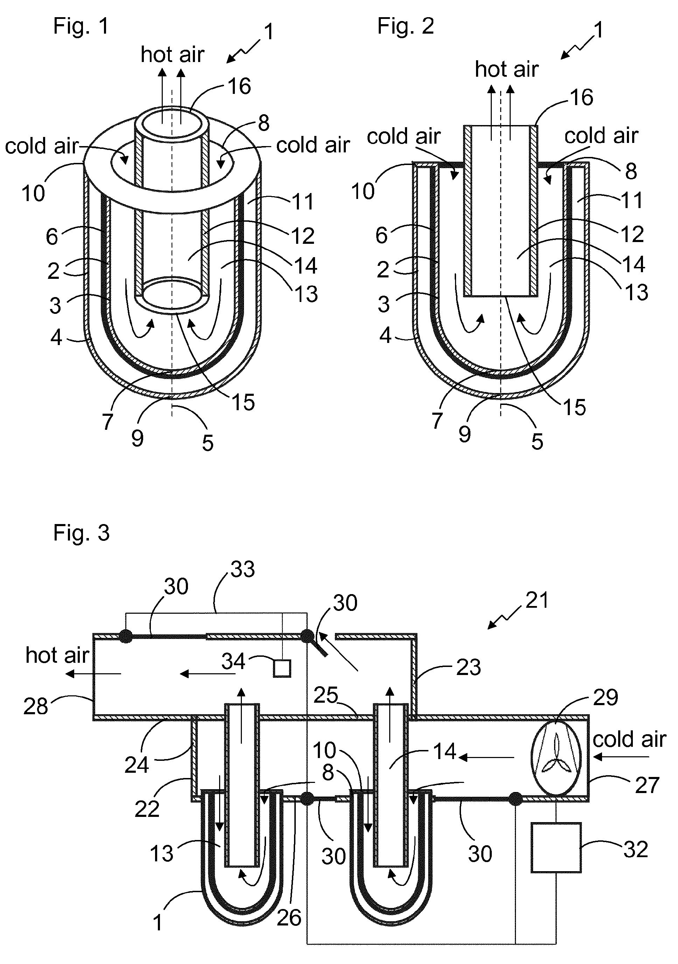

A solar thermal air flow heating tube device 1 according to an exemplary embodiment of the invention as illustrated in Figs. 1 and 2 comprises a twin-wall evacuated solar tube 2 having an inner tube 3 and an outer tube 4 coaxially surrounding the inner tube 3 along a tube's longitudinal axis 5. The inner and outer tubes 3, 4 have circular cross-sections. A solar radiation absorbing coating 6 is provided on an outside wall of the inner tube 3. The solar radiation absorbing coating 6 absorbs incident solar radiation and transforms photonic energy of the solar radiation into thermal energy to heat the inner tube 3.

The outer tube 4 is made of a material being transparent for solar radiation, e.g. a clear glass material. The inner tube 3 is made of a suitable material which may also be glass. A first end 7 of the inner tube 3 is closed and a second end 8 is open. The outer tube 4 is closed at a same end 9 as the closed end 7 of the inner tube 3 and edges of the other ends 8, 10 of the outer and inner tubes are connected to each other so as to close an annular space 11 in-between them. When the outer tube 4 and inner tube 3 are made of a same glass material, they may for instance be connected by welding.

The annular space 11 between the inner and outer tubes 3, 4 is evacuated to minimize conductive and convective heat transfer from the inner tube 3 to the outer tube 4 and thereby to the environment. For this reason the closed ends 7, 9 of the inner and outer tubes 3, 4 do not touch each other. The twin-wall evacuated solar tube 2 has a U-shaped longitudinal section comprising two semi-circles with different diameters and the evacuated space 11 surrounds the closed end 7 of the inner tube 3.

An insert tube 12 having a circular cross section is coaxially arranged in the twin-wall evacuated solar tube 2 and is made of a suitable material, e.g. a glass or metal material. The insert tube 12 has a diameter sufficiently smaller than the diameter of the inner tube 3 and divides the space in the inner tube 3 into a first air flow channel 13 defined by the space between the insert tube 12 and the twin-wall evacuated solar tube 2, and a second air flow channel 14 defined by an interior of the insert tube 12. At the side of the open end 8 of the inner tube 3 air can enter and leave the first and the second air flow channels 13, 14, respectively. At an inner, open end 15 of the insert tube 12, which is facing towards the closed end 7 of the inner tube 3, there is some space left enabling the air to flow from the first air flow channel 13 to the second air flow channel 14 so that a serial connection of the channels 13, 14 is established. While cold air is flowing through the first air flow channel 13, it is in direct thermal contact to said inner tube 3 being provided with the solar radiation absorbing coating and thereby heat is effectively transferred from the inner wall of the inner tube 3 to the cold air. Thus the cold air is effectively heated and leaves the solar thermal air flow heating tube device 1 as hot air via an outer, open end 16 of the insert tube 12 through the second air flow channel 14. The coaxial arrangement of the circular insert tube 12 in the circular interior of the inner tube 3 allows a very uniform air flow.

Fig. 3 illustrates an exemplary embodiment of a solar thermal air flow heating tube system 21 of the invention comprising two of the solar thermal air flow heating tube devices 1 as shown in Figs. 1 and 2. The number of the solar thermal air flow heating tube devices 1 is not limited to two, but can be only one or more than two, e.g. ten, or one hundred, or even more. Furthermore the solar thermal air flow heating tube system 21 comprises a first manifold 22 and a second manifold 23, wherein the first and second manifolds 22, 23 are integrated parts of a manifold arrangement 24. The second manifold 23 is separated from the first manifold 22 by an intermediate separation wall 25. The first air flow channels 13 of the solar thermal air flow heating tube devices 1 are pneumatically connected to the first manifold 22 by a direct attachment of the ends 8, 10 of the inner and outer tubes 3, 4 to an outer wall 26 of the manifold arrangement 24. The second air flow channels 14 of the solar thermal air flow heating tube devices 1 are pneumatically connected to the second manifold 23 by a direct attachment of the outer ends 16 of the insert tubes 12 to the intermediate wall 25, wherefore the insert tubes 12 protrude out of the inner tubes 3 by a determined length. In this manner a parallel arrangement of the plurality of the solar thermal air flow heating tube devices 1 is obtained.

The first manifold 22 is connected to an air flow inlet 27, and the second manifold 23 is connected to an air flow outlet 28. The solar thermal air flow heating tube system 21 comprises a motorized fan 29 for driving an air flow through the first and second manifolds 22, 23 and in parallel through each pair of serially connected first and second air flow channels 13, 14. Cold air which is to be heated is supplied by the motorized fan 29 from the space which the heater is intended to heat or from outdoor via the air flow inlet 27 into the first manifold 22, from which it progresses through the solar thermal air flow heating tube devices 1 in which the air is heated, then further to the second manifold 23 and then further to the space to be heated via the air flow outlet 28.

The first and second manifolds 22, 23 serve as a common-pressure space, and it is intended to achieve approximately equal air pressure within each of said manifolds 22, 23 under all operating conditions, thus ensuring a substantially uniform air flow distribution through all solar thermal air flow heating tube devices 1. Each of the first and second manifolds 22, 23 features an outer thermal insulation to minimize conductive, convective and radiative heat transfer to the environment, and the intermediate wall 25 features a thermal insulation to minimize heat transfer from the second manifold 23, which contains heated air, to the first manifold 22, which contains cold air.

The solar thermal air flow heating tube system 21 has a temperature control comprising a plurality of ventilation flaps 30 for excess heat release to the environment e.g. in summer. The ventilation flaps 30 are attached to the first and second manifolds 22, 23. One of the ventilation flaps 30 is shown in an open position, while all other ventilation flaps 30 are in a closed position.

Furthermore the solar thermal air flow heating tube system 21 comprises an electronic controller 32 which electrically controls the motorized fan 29 and the plurality of ventilation flaps 30 via electric cables 33. The electronic controller 32 is also linked, e.g. via an electric cable 33 or alternatively via a wireless connection, to a temperature and air flow sensor 34 of the solar thermal air flow heating tube system 21, which sensor 34 is installed in the second manifold 23. Thereby the electronic controller 32 is enabled to regulate said parts of the solar thermal air flow heating tube system 21 in accordance with parameters like temperature, time, maximum noise level etc., which are supplied by a person or other means.

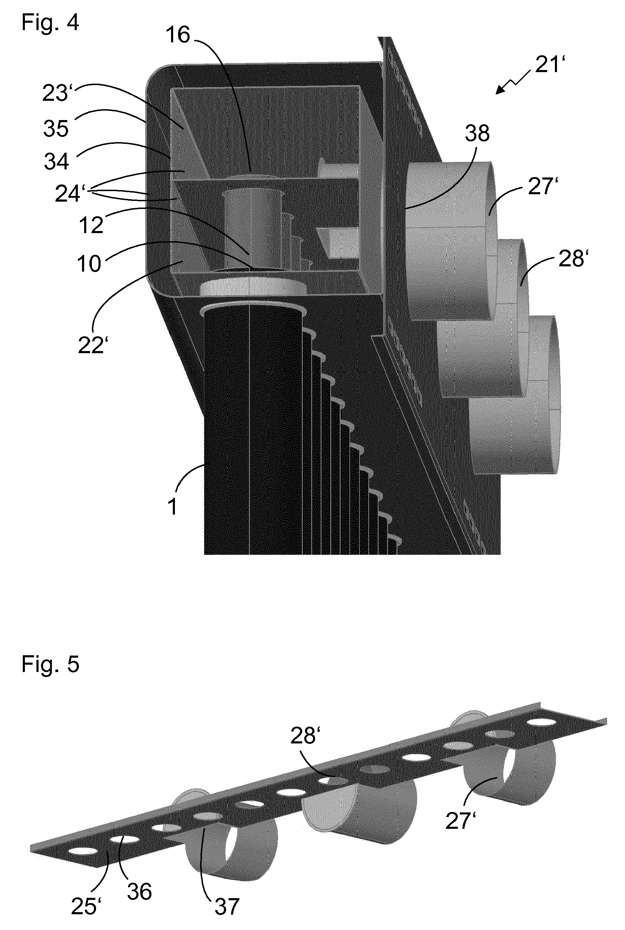

Fig. 4 shows an alternative embodiment of a solar thermal air flow heating tube system 21' according to the invention. For easier understanding the same reference numbers are used not only for identical, but also functionally equivalent elements as to the embodiment of Figs. 1 to 3. To this extent reference can be made to the description of the embodiment of Figs. 1 to 3. The solar thermal air flow heating tube system 21' has a manifold arrangement 24' comprising a manifold arrangement tube 34 and a thermal insulation tube 35 coaxially surrounding the manifold arrangement tube 34, wherein each tube has a quadratic or rectangular cross-section shape. The thermal insulation tube 35 protects the manifold arrangement tube 34 from having direct contact with the environment and thereby minimizes conductive, convective and radiative heat transfer from the manifold arrangement tube 34 to the environment.

The manifold arrangement tube 34 is divided by an intermediate wall 25', which is shown in detail in Fig. 5, into a first manifold 22' and a second manifold 23'. The intermediate wall 25' is a board with turned up edges and a plurality of circular holes 36. The circular holes 36 may or may not be equidistantly positioned along a main longitudinal axis of the intermediate wall 25'. At one edge the intermediate wall 25' is provided with a plurality of cuts 37, where two air flow inlets 27' and one air flow outlet 28' are attached to the intermediate wall 25'. This differs from the embodiment of Fig. 3, where the solar thermal air flow heating tube system 21 comprises only one air flow inlet 27 and one air flow outlet 28. In general, there can be a plurality of air flow inlets and air flow outlets. The cuts 37 may or may not be equidistantly positioned along the one edge of the intermediate wall 25', or some of them may be positioned at one of two opposite edges while the others are positioned at the other edge.

The air flow inlets and outlets 27', 28' comprise circular shaped tubes, wherein inner ends of the tubes, which are attached to the intermediate wall 25', are semi-circularly closed. The air flow inlets 27' are open at a bottom side of the intermediate wall 25' and the air flow outlets 28' are open at a top side of the intermediate wall 25'. Tubes of the air flow inlets and outlets 27', 28' pass through holes 38 in a sidewall of the thermal insulation tube 35 to the space which the heater is intended to heat. A plurality of solar thermal air flow heating tube devices 1 pass to the first and second manifolds 22', 23' through holes in the bottom of the manifold arrangement tube 34 and the bottom of the thermal insulation tube 35.

As understood by those of ordinary skill, the present invention encompasses a multiplicity of other embodiments besides the two shown in the figures. In effect, the present invention can be embodied in many different realizations by equipping any twin-wall evacuated solar tube with an air flow guiding element of arbitrarily shape, as long as the air flow guiding element defines a first air flow channel and a second air flow channel in an interior of the inner tube, separates them from each other and enables a serial connection in-between them at an inner end of the air flow guiding element. For instance the air flow guiding element may be a separation wall in the form of a flat board, whereby in this case air flowing through the solar thermal air flow heating tube device is in direct thermal contact to the inner tube while flowing through the first and second air flow channels. The connection of the solar thermal air flow heating tube device to the first and second manifolds is then correspondingly adapted.

The cross-section of the insert tube as well as the inner and outer tubes do not have to be circular, but may be arbitrarily shaped as for example hexagonal-shaped or quadratic-shaped. Furthermore, instead of a direct connection of the open ends of the outer and inner tubes there may be an additional connection element connecting the open ends of the outer and inner tubes with each other and thereby closing the space in-between them. Instead of having a twin-wall evacuated solar tube with a U-shaped longitudinal section avoiding a contact of the closed ends of the inner and outer tubes, the closed ends of the inner and outer tubes may touch each other directly or via a support clip, which may enhance the stability of the twin-wall evacuated solar tube. Moreover the solar radiation absorbing coating may be provided on an inside wall of the inner tube instead or in addition to being provided on the outside wall of the inner tube.

Alternatively to the first and second manifolds being integrated parts of a manifold arrangement, they can be separate parts. The connection of the solar thermal air flow heating tube device with the first and second manifold is then correspondingly adapted. Furthermore the parallel arrangement of the solar thermal air flow heating tube devices does not have to be vertically oriented, but also can be horizontally aligned or at any other angle aligned, as desired.

In addition or alternatively to the motorized fan positioned in flow direction directly after the air flow inlet as for example in the embodiment of Fig. 3, there may be a motorized fan be positioned in flow direction directly before the air flow outlet or anywhere else in the flow path in the first or second manifold. Furthermore the flow direction of the air flow may be reversed. Especially instead of first flowing through the first air flow channel and then through the second air flow channel of the solar thermal air flow heating tube device, the air may first flow through the second air flow channel and then through the first air flow channel.

In addition or alternatively to the plurality of ventilation flaps being attached to the first and second manifolds as for example shown in the embodiment of Fig. 3, ventilation flaps may be attached to the solar thermal air flow heating tube devices. In addition or alternatively to the electrical control of the ventilation flaps, they may be controlled mechanically or by any other means. Alternatively to the plurality of ventilation flaps as shown for example in the embodiment of Fig. 3, there may be only one ventilation flap or, in applications in which supply of hot air to a heat load is desirable all the time such as industrial processes, the ventilation flaps may be omitted.

As illustrated by the embodiments shown and described, the invention provides a solar thermal air flow heating tube device and a solar thermal air flow heating tube system equipped therewith having an increased efficiency, resulting in a high temperature of heated air and thus allowing to keep an air flow rate through this heating device low resulting in a low noise level, thus providing high human comfort level. The solar thermal air flow heating tube device can be constructed as an effective, economical, reliable and durable solar air heating device by using parts of existing technologies facilitating a simple installation. The range of application of the present invention includes, without limitation, solar air space heating applications, industrial drying processes and other air-heating applications.

## Claims

1. A solar thermal air flow heating tube device (1), comprising
- a twin-wall evacuated solar tube (2) comprising an inner tube (3) having a first end (7) closed and a second end (8) opened, and an outer tube (4) coaxially surrounding the inner tube, said inner and outer tubes defining an evacuated annular space (11) in-between, and a solar radiation absorbing coating (6) being provided on an outside and/or inside wall of the inner tube, and
- an air flow guiding element (12) arranged in in an interior of the inner tube to define a first air flow channel (13) and a second air flow channel (14), said second air flow channel being separated from the first air flow channel and serially connected to said first air flow channel adjacent to the closed first end of the inner tube.

2. The solar thermal air flow heating tube device of claim 1, further **characterized in that** the air flow guiding element (12) comprises an insert tube.

3. The solar thermal air flow heating tube device of claim 2, further **characterized in that** the insert tube (12) is coaxially arranged to the inner tube (3).

4. The solar thermal air flow heating tube device of any of claims 1 to 3, further **characterized in that** the outer tube (4) is closed at a same end (9) as the closed first end (7) of the inner tube (3) and edges of the other ends (8, 10) of the outer and inner tubes are connected to each other so as to close the evacuated annular space (11).

5. The solar thermal air flow heating tube device of claim 4, further **characterized in that** the twin-wall evacuated solar tube (2) has a U-shaped longitudinal section.

6. A solar thermal air flow heating tube system (21, 21'), comprising
- a plurality of solar thermal air flow heating tube devices (1) of any of claims 1 to 5,
- a first manifold (22, 22'), to which the first air flow channels (13) of the solar thermal air flow heating tube devices are pneumatically connected via the respective open end (8) of each inner tube (3), and
- a second manifold (23, 23'), to which the second air flow channels (14) of the solar thermal air flow heating tube devices are pneumatically connected via the respective open end of each inner tube.

7. The solar thermal air flow heating tube system of claim 6, **characterized in that** the first and second manifolds (22, 22', 23, 23') are integrated parts of a manifold arrangement (24, 24'), wherein said second manifold is separated from the first manifold by an intermediate wall (25, 25').

8. The solar thermal air flow heating tube system of claim 6 or 7, **characterized by** at least one motorized fan (29) for driving an air flow through the first and second manifolds (22, 22', 23, 23') and the serially connected first and second air flow channels (13, 14).

9. The solar thermal air flow heating tube system of any of claims 6 to 8, **characterized by** a temperature control (30) for excess heat release into the environment.

10. The solar thermal air flow heating tube system of claim 9, **characterized in that** the temperature control comprises at least one ventilation flap (30).

11. The solar thermal air flow heating tube system of any of claims 8 to 10, **characterized by** an electronic controller (32) for controlling and regulating the at least one motorized fan (29) and/or the temperature control (30).
